# EUROPÄISCHE PATENTANMELDUNG

(11) **EP 4 148 077 A1**
(43) Veröffentlichungstag der Anmeldung: **15.03.2023**
(21) Anmeldenummer: 21195815.2
(22) Anmeldetag: 09.09.2021
(51) Int. Cl.: C08G 18/08, C08G 18/24, C08G 18/42, C08G 18/62, C08G 18/79, C08G 18/80, C09D 175/04, C09D 175/06

(54) **HERSTELLUNG EINES BLOCKIERTEN HÄRTERS AUF DER BASIS EINES TEILWEISE BIO-BASIERTEN POLYISOCYANATES UND VERWENDUNG ALS 1K-PUR EINBRENNLACK**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft eine Polyisocyanatzusammensetzung, umfassend eine Isocyanatgruppen aufweisende Aufbaukomponente, wobei die Isocyanatgruppen zu ≥ 50 % mit mindestens einer mit einer Isocyanatgruppe reaktiven Verbindung, welche mindestens eine N-R¹ Gruppe umfasst, wobei R¹ ausgewählt ist aus H oder OH und N über zwei Einzelbindungen oder eine Doppelbindung mit den weiteren Atomen der Verbindung verbunden ist, umgesetzt sind, dadurch gekennzeichnet, dass die Aufbaukomponente zu ≥ 51 Gew.-% aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat und bestimmt mittels Gelpermeationschromatographie nach DIN 55672-1:2007-08, aufgebaut ist und der zu 100 Gew.-% fehlende Anteil der insgesamt in der Aufbaukomponente enthaltenen Menge an Polyisocyanaten wenigstens ein aliphatisches oder cycloaliphatisches Polyisocyanat umfasst oder daraus besteht. Ferner betrifft die Erfindung die Verwendung dieser Polyisocyanatzusammensetzung zur Herstellung eines Ein-Komponenten-Systems sowie ein Ein-Komponenten-System enthalten diese Polyisocyanatzusammensetzung und wenigstens ein Polyol. Zudem betrifft die Erfindung ein Verfahren zur Herstellung einer Beschichtung auf einem Substrat, bei dem ein Ein-Komponenten-System gemäß der Erfindung auf das Substrat aufgebracht und bei einer Temperatur im Bereich von 80 °C bis 300 °C ausgehärtet wird und die somit hergestellte Beschichtung. Schließlich betrifft die Erfindung einen Verbund aus einer Beschichtung der vorliegenden Erfindung und einem Substrat mit einer Oberfläche aus Metall und/oder Kunststoff.

## Beschreibung

Die Erfindung betrifft eine Polyisocyanatzusammensetzung, umfassend eine Isocyanatgruppen aufweisende Aufbaukomponente, wobei die Isocyanatgruppen zu ≥ 50 % mit mindestens einer mit einer Isocyanatgruppe reaktiven Verbindung, welche mindestens eine N-R¹ Gruppe umfasst, wobei R¹ ausgewählt ist aus H oder OH und N über zwei Einzelbindungen oder eine Doppelbindung mit den weiteren Atomen der Verbindung verbunden ist, umgesetzt sind, dadurch gekennzeichnet, dass die Aufbaukomponente zu ≥ 51 Gew.-% aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat und bestimmt mittels Gelpermeationschromatographie nach DIN 55672-1:2007-08, aufgebaut ist und der zu 100 Gew.-% fehlende Anteil der insgesamt in der Aufbaukomponente enthaltenen Menge an Polyisocyanaten wenigstens ein aliphatisches oder cycloaliphatisches Polyisocyanat umfasst oder daraus besteht. Ferner betrifft die Erfindung die Verwendung dieser Polyisocyanatzusammensetzung zur Herstellung eines Ein-Komponenten-Systems sowie ein Ein-Komponenten-System enthalten diese Polyisocyanatzusammensetzung und wenigstens ein Polyol. Zudem betrifft die Erfindung ein Verfahren zur Herstellung einer Beschichtung auf einem Substrat, bei dem ein Ein-Komponenten-System gemäß der Erfindung auf das Substrat aufgebracht und bei einer Temperatur im Bereich von 80 °C bis 300 °C ausgehärtet wird und die somit hergestellte Beschichtung. Schließlich betrifft die Erfindung einen Verbund aus einer Beschichtung der vorliegenden Erfindung und einem Substrat mit einer Oberfläche aus Metall und/oder Kunststoff.

Beschichtungen auf Basis von Polyisocyanatzusammensetzungen sind bekannt und kommerziell erhältlich. Ein Vertreter davon sind HDI (1,6-Hexamethylendiisocyanat)-basierte Zusammensetzungen (beispielsweise auf Basis von Desmodur^{®} N3300, kommerziell erhältlich von der Covestro AG) bei denen unter anderem zur Verbesserung der Lagerstabilität und Handhabung von Lacksystemen Isocyanatgruppen blockiert werden, beispielsweise mit N-haltigen Azolverbindungen. Jedoch zeigen solche Produkte eine relative geringe Härte als auch eine geringe Bewitterungsstabilität.

Aufgabe der vorliegenden Erfindung war es deshalb eine Polyisocyanatzusammensetzung mit teilweise geblockten Isocyanatgruppen bereitzustellen, die vorstehend beschriebene Nachteile überwindet.

Die Erfinder der vorliegenden Erfindung haben überraschend gefunden, dass dies mit der spezifischen Polyisocyanatzusammensetzung der vorliegenden Erfindung auf Basis von PDI (1,5-Pentamethylendiisocyanat) geblockt mit mindestens einer mit einer Isocyanatgruppe reaktiven Verbindung, welche mindestens eine N-R¹ Gruppe umfasst, wobei R¹ ausgewählt ist aus H oder OH und N über zwei Einzelbindungen oder eine Doppelbindung mit den weiteren Atomen der Verbindung verbunden ist erreicht werden kann. Ferner wird damit eine nachhaltigere Zusammensetzung bereitgestellt.

Das ist insbesondere überraschend, da für PDI basierte mit CH-aciden Reagenzien geblockte Zusammensetzungen in der WO 2017/021150 A1 im Einleitungsteil beschrieben ist, dass angenommen wird, dass bei einer zusätzlichen Verwendung von Oximen oder 3,5-Dimethylpyrazol mit PDI basierten Polyisocyanat Nachteile zu erwarten wären. Ferner sind die vorliegenden Zusammensetzungen vorteilhaft, da im Gegensatz zu der dort beschriebenen Zusammensetzung keine Kristallisationsinhibitoren benötigt werden.

Deshalb betrifft die vorliegende Erfindung in einem ersten Aspekt eine Polyisocyanatzusammensetzung, umfassend eine Isocyanatgruppen aufweisende Aufbaukomponente, wobei die Isocyanatgruppen zu ≥ 50 %, bevorzugt ≥ 60%, stärker bevorzugt ≥ 70%, am stärksten bevorzugt ≥ 80 %, ≥ 90 % oder ≥ 95 %, mit mindestens einer mit Isocyanatgruppen reaktiven Verbindung, welche mindestens eine N-R¹ Gruppe umfasst, wobei R¹ ausgewählt ist aus H oder OH und N über zwei Einzelbindungen oder eine Doppelbindung mit den weiteren Atomen der Verbindung verbunden ist, umgesetzt sind, dadurch gekennzeichnet, dass die Aufbaukomponente zu ≥ 51 Gew.-% aus wenigstens einem Polyisocyanat basierend auf 1,5- Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat und bestimmt mittels Gelpermeationschromatographie nach DIN 55672-1:2007-08, aufgebaut ist und der zu 100 Gew.-% fehlende Anteil der insgesamt in der Aufbaukomponente enthaltenen Menge an Polyisocyanaten wenigstens ein aliphatisches oder cycloaliphatisches Polyisocyanat umfasst oder daraus besteht.

In einem zweiten Aspekt betrifft die vorliegende Erfindung die Verwendung einer Polyisocyanatzusammensetzung gemäß der vorliegenden Erfindung zur Herstellung eines Ein-Komponenten-Systems, insbesondere eines Ein-Komponenten-Beschichtungs-Systems.

In einem dritten Aspekt betrifft die vorliegende Erfindung ein Ein-Komponenten-System, enthaltend wenigstens eine Polyisocyanatzusammensetzung gemäß der vorliegenden Erfindung, wenigstens ein Polyol und gegebenenfalls weitere Zusatzstoffe.

In einem vierten Aspekt betrifft die vorliegende Erfindung ein Verfahren zur Herstellung einer Beschichtung auf einem Substrat, bei dem ein Ein-Komponenten-System der vorliegenden Erfindung auf das Substrat aufgebracht und bei einer Temperatur im Bereich von 80 °C bis 300 °C ausgehärtet wird, bevorzugt im Bereich von 90 °C bis 250 °C.

In einem fünften Aspekt betrifft die vorliegende Erfindung eine Beschichtung, hergestellt oder herstellbar nach einem Verfahren gemäß der vorliegenden Erfindung.

Schließlich betrifft die vorliegende Erfindung in einem sechsten Aspekt einen Verbund aus einer Beschichtung gemäß der vorliegenden Erfindung und einem Substrat mit einer Oberfläche aus Metall und/oder Kunststoff.

Gemäß der vorliegenden Erfindung werden unter Trimerstrukturen folgende, aus Diisocyanaten gebildete Isocyanuratstruktureinheiten verstanden, die gemäß der oligomeren Verteilung statistisch miteinander verknüpft sind: 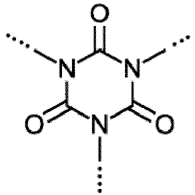 Isocyanuratgruppe

Die Angabe des Gehalts an Isocyanurattrimer als Gewichtsanteil bezogen auf das Gesamtgewicht der jeweiligen Polyisocyanate bezieht sich erfindungsgemäß auf die Verbindungen in der Polyisocyanatzusammensetzung, die genau eine Isocyanuratgruppe und drei Isocyanatgruppen enthalten. Der Gehalt an Isocyanurattrimer wird mittels Gelpermeationschromatographie (GPC) nach der DIN 55672-1:2007-08 als Flächenprozent (Fl.-%) bestimmt.

In einer ersten bevorzugten Ausführungsform besteht die Aufbaukomponente zu mindestens 60 Gew.-%, bevorzugt zu mindestens 70 Gew.-% und besonders bevorzugt zu mindestens 80 Gew.-%, aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat. Hieraus ergibt sich unter anderem der Vorteil, dass die Lagerstabilität weiter erhöht werden kann.

Zusätzlich ergibt sich der Vorteil, dass der biobasierte Anteil an der erfindungsgemäßen Polyisocyanatzusammensetzung weiter erhöht werden kann. Für diesen Fall ist es daher ganz besonders bevorzugt, wenn die Aufbaukomponente zu 100 Gew-% aus wenigstens einem Polyisocyanat basierend auf 1,5-Pentamethylendiisocyanat besteht.

In einer weiteren bevorzugten Ausführungsform ist der Gehalt an Isocyanurattrimer ≥ 36 Fl.-% und ≤ 56 Fl.-%, bevorzugt ≥ 38 Fl.-% und ≤ 51 Fl.-%, bezogen auf das Gesamtgewicht der Polyisocyanate auf Basis von 1,5-Pentamethylendiisocyanat.

Gemäß einer weiteren bevorzugten Ausführungsform besteht der zu 100 Gew.-% fehlende Anteil der insgesamt in der Aufbaukomponente enthaltenen Menge aus wenigstens einem aliphatischen oder cycloaliphatischen Polyisocyanat und beträgt mindestens 5 Gew.-%, bevorzugt mindestens 10 Gew.-% und besonders bevorzugt mindestens 15 Gew.-%.

Die Polyisocyanate basierend auf 1,5-Pentamethylendiisocyanat sind beliebige durch Modifizierung von 1,5-Pentamethylendiisocyanat (PDI) erhältliche oligomere Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 und EP 0 798 299 A1 beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI.

Das zur Herstellung der auf 1,5-Pentamethylendiisocyanat basierenden Polyisocyanate eingesetzte PDI ist auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

Der Gehalt an Isocyanurattrimer lässt sich durch entsprechende Reaktionsführung einstellen, so wird die Trimerisierungsreaktion vorzugsweise nach Erreichen des gewünschten Gehalts an Isocyanurattrimer abgebrochen. Dies kann beispielsweise durch Abkühlen des Reaktionsgemisches auf Raumtemperatur erfolgen. Im Allgemeinen wird die Umsetzung aber durch Zugabe eines oder mehrerer dem Fachmann bekannter Katalysatorgifte und gegebenenfalls nachfolgendes kurzzeitiges Erhitzen der Reaktionsmischung beispielsweise auf eine oberhalb 80 °C liegende Temperatur beendet.

Die, von Polyisocyanaten basierend auf 1,5-Pentamethylendiisocyanat verschiedenen, aliphatischen oder cycloaliphatischen Polyisocyanate sind beliebige durch Modifizierung von geeigneten monomeren Diisocyanaten erhältliche oligomere Polyisocyanate mit Uretdion-, Isocyanurat-, Allophanat-, Biuret-, Iminooxadiazindion- und/oder Oxadiazintrionstruktur oder beliebige Gemische solcher Polyisocyanate. Die Herstellung dieser Polyisocyanate erfolgt nach an sich bekannten Methoden zur Isocyanatoligomerisierung, wie sie beispielsweise in J. Prakt. Chem. 336 (1994) 185 - 200 beispielhaft beschrieben sind, durch Umsetzung eines Teils der Isocyanatgruppen der monomeren Diisocyanate unter Bildung von Polyisocyanatmolekülen, die aus mindestens zwei Diisocyanatmolekülen bestehen, und einer sich in der Regel anschließenden destillativen oder extraktiven Abtrennung der nicht umgesetzten monomeren Diisocyanate.

Geeignete monomere Diisocyanate sind insbesondere solche des Molekulargewichtsbereichs 140 bis 400, wie z. B. 1 ,4-Diisocyanatobutan, 1,6-Hexamethylendiisocyanat (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 2,4- und 2,6-Diisocyanato-1-methylcyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 2,4'-Diisocyanatodicyclohexylmethan, 1-Isocyanato-1 -methyl-4(3)isocyanato-methylcyclohexan, Bis-(isocyanatomethyl)-norbornan, 1,3- und 1,4-Bis(isocyanatomethyl)benzol (XDI) oder beliebige Gemische solcher Diisocyanate. Generell ist es bevorzugt, wenn der Restmonomerengehalt an monomeren Diisocyanaten in der erfindungsgemäßen Polyisocyanatzusammensetzung unter 0,5 Gew.-%, besonders bevorzugt unter 0,3 Gew.-% liegt. Die Bestimmung der Restmonomergehalte kann beispielsweise gaschromatographisch nach der DIN EN ISO 10283:2006-04erfolgen.

Es ist weiterhin bevorzugt, dass der zu 100 Gew.-% fehlende Anteil der insgesamt in der Aufbaukomponente enthaltenen Menge an Polyisocyanaten aus wenigstens einem aliphatischen Polyisocyanat besteht.

In einer bevorzugten Ausführungsform ist die mindestens eine mit einer Isocyanatgruppe reaktiven Verbindung ausgewählt aus N-haltigen Azolverbindungen, Oximen, Aminen oder Lactame oder Mischungen davon, stärker bevorzugt ist sie ausgewählt aus Pyrazolen, Ketoximen, sekundären Aminen oder Lactamen oder Mischungen davon, besonders bevorzugt ist sie ausgewählt aus 3,5-Dimethylpyrazol, 3,5-Diisopropylpyrazol, 3,5-Di-tert-butylpyrazol, 3,5-Diphenylpyrazol, Butanonoxim, 2-Pentanonoxim, Cyclohexanonoxim, 4-Methyl-2-pentanonoxim, Diisopropylamin, N-Benzyltertbutylamin oder ε-Caprolactam oder Mischungen davon, am stärksten bevorzugt ist die Verbindung 3,5-Dimethylpyrazol oder Butanonoxim.

Die spätere Deblockierung der aus diesen Verbindungen entstehenden blockierenden Gruppe erfolgt bei 80 bis 300 °C.

Neben der Isocyanatgruppen aufweisenden Aufbaukomponente und der blockierenden Verbindung kann die erfindungsgemäße Polyisocyanatzusammensetzung noch weitere Verbindungen enthalten.

Generell kann die erfindungsgemäße Polyisocyanatzusammensetzung lösemittelfrei vorliegen, es können aber auch ein oder mehrere gegenüber den reaktiven Gruppen der eingesetzten Komponenten inerte Lösungsmittel enthalten sein.

Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®}(Shell Deutschland Oil GmbH, Hamburg, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einer weiteren bevorzugten Ausführungsform enthält die erfindungsgemäße Polyisocyanatzusammensetzung wenigstens ein organisches Lösungsmittel, bevorzugt Solventnaphtha, wie Solventnaphtha 100, Methoxypropylacetat, Butylacetat, Xylol und Mischungen davon, besonders bevorzugt Solventnaphtha 100, Methoxypropylacetat und Mischungen davon.

Durch Wahl der Menge an Lösungsmittel, kann der Festkörpergehalt der erfindungsgemäßen Polyisocyanatzusammensetzung bei der bevorzugten Mitverwendung organischer Lösungsmittel in weiten Grenzen variiert werden. Hierbei ist es ganz besonders bevorzugt, wenn die erfindungsgemäße Polyisocyanatzusammensetzung einen Festkörpergehalt von ≥ 10 und ≤ 95 Gew.-%, bevorzugt von ≥ 25 und ≤ 85 Gew.-%, aufweist.

Die erfindungsgemäße Polyisocyanatzusammensetzung wird durch Umsetzung der Isocyanatgruppen der in der Isocyanatgruppen aufweisenden Aufbaukomponente enthaltenen Polyisocyanate mit den vorstehend genannten mindestens einen reaktiven Verbindungen erhalten.

Durch die Umsetzung werden die Isocyanatgruppen der Polyisocyanate in stabile Addukte überführt, die mit Polyolen bei Raumtemperatur lagerstabile Abmischungen ergeben. Bei Temperaturen von ≥ 80 °C gibt das Blockierungsmittel die Isocyanatgruppe für die Vernetzung mit der Polyolkomponente frei.

Daher ist die erfindungsgemäße Polyisocyanatzusammensetzung sehr gut zur Herstellung eines Ein-Komponenten-Systems geeignet, somit ist eine solche Verwendung ein weiterer Gegenstand der Erfindung. Hierzu wird die erfindungsgemäße Polyisocyanatzusammensetzung mit weiteren, im Folgenden beschriebenen Verbindungen vermischt.

Ein Ein-Komponenten-System enthaltend wenigstens eine erfindungsgemäße Polyisocyanatzusammensetzung, wenigstens ein Polyol und gegebenenfalls weitere Zusatzstoffe ist ein weiterer Gegenstand der Erfindung. Das erfindungsgemäße Ein-Komponenten-System zeichnet sich vorteilhafterweise durch eine höhere Härte und Bewitterungsstabilität im Vergleich zu herkömmlichen, blockierten Ein-Komponenten-Systemen aus.

Geeignete Polyole sind beispielsweise Polyetherpolyole, Polyesterpolyole, Polycarbonatpolyole oder Polyacrylatpolyole.

Bei den gegebenenfalls enthaltenen Zusatzstoffen kann es sich beispielsweise um, dem Fachmann bekannte, Co-Bindemittel, Trocknungsmittel, Füllstoffe, Co-Löser, Färb- oder Effekt-Pigmente, Verdicker, Mattierungsmittel, Lichtschutzmittel, Lackadditive, wie Dispergiermittel, Verdicker, Entschäumer und andere Zusatzstoffe, wie Haftmittel, Fungizide, Bakterizide, Stabilisatoren oder Inhibitoren und Katalysatoren oder Emulgatoren handeln.

Ein weiterer Gegenstand der Erfindung ist ein Verfahren zur Herstellung einer Beschichtung auf einem Substrat, bei dem das erfindungsgemäße Ein-Komponenten-System auf das Substrat aufgebracht und bei einer Temperatur von 80 °C bis 300°C ausgehärtet wird.

Die Applikation des erfindungsgemäßen Ein-Komponenten-Systems kann nach bekannten Methoden, beispielsweise durch Spritzen, Streichen, Fluten oder mit Hilfe von Walzen oder Rakeln auf beliebige Substrate erfolgen. Als Substrate eignen sich beispielsweise Metall, Glas, Stein, keramische Materialien, Beton, Kunststoffe, Composite, Textilien, Leder oder Papier, die vor der Beschichtung gegebenenfalls auch mit üblichen Grundierungen versehen werden können. Besonders bevorzugte Substrate sind Substrate, die eine Oberfläche aus Metall und/oder Kunststoff aufweisen.

Daher ist eine Beschichtung, hergestellt oder herstellbar nach dem erfindungsgemäßen Verfahren ein weiterer Gegenstand der Erfindung.

Neben der Beschichtung selbst ist ein Verbund aus der erfindungsgemäßen Beschichtung und einem Substrat mit einer Oberfläche aus Metall und/oder Kunststoff ein weiterer Gegenstand der Erfindung.

Die Erfindung betrifft insbesondere die folgenden Ausführungsformen:
1. Nach einer ersten Ausführungsform betrifft die Erfindung eine Polyisocyanatzusammensetzung, umfassend eine Isocyanatgruppen aufweisende Aufbaukomponente, wobei die Isocyanatgruppen zu ≥ 50 % mit mindestens einer mit einer Isocyanatgruppe reaktiven Verbindung, welche mindestens eine N-R¹ Gruppe umfasst, wobei R¹ ausgewählt ist aus H oder OH und N über zwei Einzelbindungen oder eine Doppelbindung mit den weiteren Atomen der Verbindung verbunden ist, umgesetzt sind, dadurch gekennzeichnet, dass die Aufbaukomponente zu ≥ 51 Gew.-% aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat und bestimmt mittels Gelpermeationschromatographie nach DIN 55672-1:2007-08, aufgebaut ist und der zu 100 Gew.-% fehlende Anteil der insgesamt in der Aufbaukomponente enthaltenen Menge an Polyisocyanaten wenigstens ein aliphatisches oder cycloaliphatisches Polyisocyanat umfasst oder daraus besteht.
2. Polyisocyanatzusammensetzung nach Ausführungsform 1, dadurch gekennzeichnet, dass die Aufbaukomponente zu mindestens 60 Gew.-%, aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat, besteht.
3. Polyisocyanatzusammensetzung nach Ausführungsform 1 oder 2, dadurch gekennzeichnet, dass der Gehalt an Isocyanurattrimer ≥ 36 Fl.-% und ≤ 56 Fl.-% beträgt, bezogen auf das Gesamtgewicht der Polyisocyanate auf Basis von 1,5- Pentamethylendiisocyanat.
4. Polyisocyanatzusammensetzung nach einer der vorstehenden Ausführungsformen, dadurch gekennzeichnet, dass der zu 100 Gew.-% fehlende Anteil der insgesamt in der Aufbaukomponente enthaltenen Menge an Polyisocyanaten zu mindestens 5 Gew.-% aus dem aliphatischen oder cycloaliphatischen Polyisocyanat besteht.
5. Polyisocyanatzusammensetzung nach einer der vorstehenden Ausführungsformen, dadurch gekennzeichnet, dass die mindestens eine mit einer Isocyanatgruppe reaktive Verbindung ausgewählt ist aus N-haltigen Azolverbindungen, Oximen, Aminen oder Lactamen oder Mischungen davon.
6. Polyisocyanatzusammensetzung nach einer der vorstehenden Ausführungsformen, dadurch gekennzeichnet, dass die mindestens eine mit einer Isocyanatgruppe reaktiven Verbindung ausgewählt ist aus Pyrazolen, Ketoximen, sekundäre Aminen oder Lactamen oder Mischungen davon.
7. Polyisocyanatzusammensetzung nach einer der vorstehenden Ausführungsformen, dadurch gekennzeichnet, dass die mindestens eine mit einer Isocyanatgruppe reaktiven Verbindung ausgewählt ist aus 3,5-Dimethylpyrazol, 3,5-Diisopropylpyrazol, 3,5-Di-tert-butylpyrazol, 3,5-Diphenylpyrazol, Butanonoxim, 2-Pentanonoxim, Cyclohexanonoxim, 4-Methyl-2-pentanonoxim, Diisopropylamin, N-Benzyltertbutylamin, ε-Caprolactam oder Mischungen davon.
8. Polyisocyanatzusammensetzung nach einer der vorstehenden Ausführungsformen, dadurch gekennzeichnet, der zu 100 Gew.-% fehlende Anteil der insgesamt in der Aufbaukomponente enthaltenen Menge an Polyisocyanaten aus dem wenigstens einen aliphatischen Polyisocyanat besteht.
9. Polyisocyanatzusammensetzung nach einer der vorstehenden Ausführungsformen, dadurch gekennzeichnet, dass die Polyisocyanatzusammensetzung wenigstens ein organisches Lösungsmittel enthält.
10. Verwendung einer Polyisocyanatzusammensetzung nach einer der Ausführungsformen 1 bis 9 zur Herstellung eines Ein-Komponenten-Systems.
11. Ein-Komponenten-System, enthaltend wenigstens eine Polyisocyanatzusammensetzung nach einer der Ausführungsformen 1 bis 9, wenigstens ein Polyol und gegebenenfalls weitere Zusatzstoffe.
12. Verfahren zur Herstellung einer Beschichtung auf einem Substrat, bei dem ein Ein-Komponenten-System nach Ausführungsform 11 auf das Substrat aufgebracht und bei einer Temperatur im Bereich von 80 °C bis 300 °C ausgehärtet wird.
13. Beschichtung, hergestellt oder herstellbar nach einem Verfahren gemäß Ausführungsform 12.
14. Verbund aus einer Beschichtung nach Ausführungsform 13 und einem Substrat mit einer Oberfläche aus Metall und/oder Kunststoff.

Im Nachfolgenden wird die Erfindung an Beispielen näher erläutert, die jedoch nicht als einschränkend zu interpretieren sind.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem MCR302 der Fa. Anton Paar Germany GmbH (DE) nach DIN EN ISO 3219:1994-10.

Die Messung der Farbzahl erfolgte spektrofotometrisch nach DIN EN 1557: 1996 mit einem LICO 690 Spektralcolorimeter der Fa. Lange, DE.

Die Lösemittel- und Wasserbeständigkeiten wurden nach DIN EN ISO 4628-1:2016-07 ermittelt.

Die Messung des nicht-flüchtigen Anteils (NFA) erfolgt nach DIN EN ISO 3251:2019.

Die Messung des erneuerbaren Anteils mittels Isotopen-Analytik erfolgte nach ASTM-D6866-20.

### Liste der Handelsnamen und Abkürzungen

### Produkte der Firma Covestro

### Desmodur^{®} N 3300

**Aliphatisches Polyisocyanat (HDI-Isocyanurat), Lieferform 100 %**

| | |
|---|---|
| NCO-Gehalt: | 21,8% |
| Viskosität | ca. 3000 mPas bei 23 °C |

### Desmodur^{®} eco N 7300

**Aliphatisches Polyisocyanat (PDI-Isocyanurat), Lieferform 100 %**

| | |
|---|---|
| NCO-Gehalt: | 21,75% |
| Viskosität | ca. 9500 mPas bei 23 °C |

### Uralac^{®} SN844 S2G3-60ND

**Gesättigter Polyester, Lieferform 60% in Solvent Naphtha 150ND/ Butyl Glycol (30/10)**

| | |
|---|---|
| OHZ: | 30-35 mg KOH/g |
| Viskosität | 2,8-3,2 Pas bei 23 °C |

- Dimethylpyrazol wurde von der Firma Wacker Chemie AG (DE) bezogen.
- Acetylaceton wurde von der Firma Daicel Chemical Industries, Ltd. (Japan) bezogen.
- Hydrazin Hydrate wurde von der Firma Merck KGaA Deutschland bezogen.
- Solvent Naphtha 100 wurde von der Firma Brenntag GmbH bezogen.
- Methoxypropylacetat wurde von der Firma OQema GmbH bezogen.
- Solvent Naphtha 150 ND wurde von der Firma DHC bezogen.
- Butylglycol wurde von der Firma Brenntag GmbH bezogen.
- Kronos 2360 (Titandioxid) wurde von der Firma Kronos bezogen.
- Dibutylzinndilaurat wurde von der Firma D B Becker Co Inc. bezogen.
- Urad dd27 ND (Acrylatpolymer als Oberflächenadditiv) wurde von der Firma Synres B.V. bezogen.

### Vergleichsbeispiel 1 (Vergleichsbeispiel)

260 g Acetyl Aceton wird mit der entsprechenden Menge Lösemittel vorgelegt. Es wird Stickstoff eingeleitet und die Mischung auf 70 °C geheizt. 130 g Hydrazin Hydrat wird über einen Zeitraum von 30 Minuten zugetropft. Bei der exothermen Reaktion steigt die Reaktionstemperatur auf 95 ― 98 °C. Während der Abscheidung von Wasser wird die Reaktionstemperatur auf 150 °C erhöht, bis die Wasserabscheidung abgeschlossen ist. Die Reaktion wird auf 73 °C abgekühlt und 501 g Desmodur N^{®} 3300 portionsweise zu dosiert. Die Reaktionstemperatur steigt auf 90 °C an. Das Gemisch wird gerührt bis der theoretische NCO Gehalt von 0,0 Gew.-% erreicht ist.

Nach Abkühlen auf Raumtemperatur werden die Kenndaten Viskosität, Farbzahl und nicht-flüchtiger Anteil ermittelt:
Viskosität: 4300 mPas bei 23 °C
Farbzahl: ≤ 100 Hz
Nicht-flüchtiger Anteil: 75 ±2%
Blockierter NCO Gehalt: 10,5%
Erneuerbarer Anteil: 0%

### Beispiel 1 (erfindungsgemäßes Beispiel)

501 g **Desmodur^{®}** eco N 7300 wird mit d er entsprechenden Menge an Lösemittel unter Stickstoff vorgelegt und auf 50 °C geheizt. Anschließend werden 249 g Dimethylpyrazol portionsweise innerhalb von 2 Stunden zudosiert, der Feststoff gelöst und das Gemisch bei 70 °C gerührt bis der theoretische NCO Gehalt von 0,0 Gew.-% erreicht ist.

Nach Abkühlen auf Raumtemperatur werden die Kenndaten Viskosität, Farbzahl und nicht-flüchtiger Anteil ermittelt:
Viskosität: 8500 mPas bei 23 °C
Farbzahl: ≤ 100 Hz
Nicht-flüchtiger Anteil: 75 ±2%
Blockierter NCO Gehalt: 10,9%
Erneuerbarer Anteil: 32%

### Lackprüfungen

Alle Prozentangaben beziehen sich, soweit nichts anderes angegeben wird, auf das Gewicht.

Die Bestimmung der Pendeldämpfung nach König erfolgte nach DIN 53157, ISO 1522.

Die Durchführung der Glanzmessung erfolgt nach NEN-EN 13523-2:2014, ISO 2813.

Die Durchführung des T-Bend Test erfolgte nach NEN-EN 13523-7:2014.

Durchführung Bleistifthärte erfolgte nach NEN-EN 13523-4:2014.

Die Farbmessung der bewitterten Lacke erfolgte nach DIN EN ISO 11664 (Teil 4).

Die Durchführung der Kurzbewitterung erfolgt nach DIN EN ISO 16474-2, Verfahren A, Zyklus-Nr. 1 (Xenon).

### Anwendungsbeispiele (erfindungsgemäß)

Zur Untersuchung der Lackeigenschaften wurde eine Formulierung auf Basis der thermisch aktivierbaren Härter des Vergleichsbeispiels 1 und Beispiels 1 sowie jeweils Uralac^{®} SN844 S2G3 60 ND in einem NCO:OH Verhältnis von 1:1 hergestellt. Als Lösemittel wurde eine Mischung aus Solvent Naphtha 150 ND und Butylglyol im Verhältnis 3:1 verwendet. Details zur Lackformulierung sind in Tabelle 1 aufgeführt.

Diese Lackformulierungen wurden mit einem Rakel auf Aluminiumsubstrat aufgezogen und bei einer Peak Metal Temperature von 241 °C eingebrannt. Die Schichtdicke betrug in allen Fällen 20-22 µm.

**Tabelle 1: Zusammensetzung Lackformulierung**

| | Lack 1 | Lack 2 |
|---|---|---|
| | (Vgl.) | (erfindungsgemäß) |
| Uralac SN844 S2G3 60 ND | 17,71 | 17,88 |
| Kronos 2360 | 31,88 | 32,31 |
| Solv. 150 ND/ Butylglycol | 7,08 | 7,19 |
| Anreiben für 15 min bei 2000 rpm, 10 min bei 1000 rpm | | |
| Uralac SN844 S2G3 ND | 27,34 | 28,03 |
| Vergleichsbeispiel 1 | 6,47 | |
| Beispiel 1 | | 6,35 |
| DBTL (10% in Solv 150 ND) | 1,87 | 0,95 |
| Urad dd27 (10% in Solv 150 ND) | 0,32 | 0,32 |
| Solv. 150 ND/ Butylglycol | 7,34 | 6,97 |

**Tabelle 2: Lackeigenschaften**

| | Lack 1 | Lack 2 |
|---|---|---|
| | (Vgl) | (erfindungsgemäß) |
| **Glanz 20** ° | 97 | 91 |
| **Glanz 60** ° | 99 | 96 |
| **T bend Rissbildung** | 0,5 T | 0,5 T |
| **T bend Haftung** | 0 T | 0 T |
| **T bend 15 min bei 80 °C** | 0,5 T | 0,5 T |
| **Pendeldämpfung nach König** | 176 | 188 |
| **Bleistifthärte** | H | 2H |
| **Vergilbung (Δb-Wert)** | -0,6 | -0,2 |
| **MEK Doppelhübe** | 100 | 100 |

Hinsichtlich der Flexibilität zeigen beide Materialien vergleichbare Eigenschaften. In Bezug auf die Härte und Bewitterungsstabilität zeigt die Formulierung auf Basis des erfindungsgemäßen Beispiels 1 verbesserte Eigenschaften.

## Patentansprüche

1. Polyisocyanatzusammensetzung, umfassend eine Isocyanatgruppen aufweisende Aufbaukomponente, wobei die Isocyanatgruppen zu ≥ 50 % mit mindestens einer mit einer Isocyanatgruppe reaktiven Verbindung, welche mindestens eine N-R¹ Gruppe umfasst, wobei R¹ ausgewählt ist aus H oder OH und N über zwei Einzelbindungen oder eine Doppelbindung mit den weiteren Atomen der Verbindung verbunden ist, umgesetzt sind, **dadurch gekennzeichnet, dass** die Aufbaukomponente zu ≥ 51 Gew.-% aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat und bestimmt mittels Gelpermeationschromatographie nach DIN 55672-1:2007-08, aufgebaut ist und der zu 100 Gew.-% fehlende Anteil der insgesamt in der Aufbaukomponente enthaltenen Menge an Polyisocyanaten wenigstens ein aliphatisches oder cycloaliphatisches Polyisocyanat umfasst oder daraus besteht.

2. Polyisocyanatzusammensetzung nach Anspruch 1, **dadurch gekennzeichnet, dass** die Aufbaukomponente zu mindestens 60 Gew.-%, aus wenigstens einem Polyisocyanat basierend auf 1,5-Pentamethylendiisocyanat mit einem Gehalt an Isocyanurattrimer von ≤ 60 Fl.-%, bezogen auf das Gesamtgewicht der Polyisocyanate auf Basis von 1,5-Pentamethylendiisocyanat, besteht.

3. Polyisocyanatzusammensetzung nach Anspruch 1 oder 2, **dadurch gekennzeichnet, dass** der Gehalt an Isocyanurattrimer ≥ 36 Fl.-% und ≤ 56 Fl.-% beträgt, bezogen auf das Gesamtgewicht der Polyisocyanate auf Basis von 1,5- Pentamethylendiisocyanat.

4. Polyisocyanatzusammensetzung nach einem der vorstehenden Ansprüche, **dadurch gekennzeichnet, dass** der zu 100 Gew.-% fehlende Anteil der insgesamt in der Aufbaukomponente enthaltenen Menge an Polyisocyanaten zu mindestens 5 Gew.-% aus dem aliphatischen oder cycloaliphatischen Polyisocyanat besteht.

5. Polyisocyanatzusammensetzung nach einem der vorstehenden Ansprüche, **dadurch gekennzeichnet, dass** die mindestens eine mit einer Isocyanatgruppe reaktive Verbindung ausgewählt ist aus N-haltigen Azolverbindungen, Oximen, Aminen oder Lactamen oder Mischungen davon.

6. Polyisocyanatzusammensetzung nach einem der vorstehenden Ansprüche, **dadurch gekennzeichnet, dass** die mindestens eine mit einer Isocyanatgruppe reaktiven Verbindung ausgewählt ist aus Pyrazolen, Ketoximen, sekundäre Aminen oder Lactamen oder Mischungen davon.

7. Polyisocyanatzusammensetzung nach einem der vorstehenden Ansprüche, **dadurch gekennzeichnet, dass** die mindestens eine mit einer Isocyanatgruppe reaktiven Verbindung ausgewählt ist aus 3,5-Dimethylpyrazol, 3,5-Diisopropylpyrazol, 3,5-Di-tert-butylpyrazol, 3,5-Diphenylpyrazol, Butanonoxim, 2-Pentanonoxim, Cyclohexanonoxim, 4-Methyl-2-pentanonoxim, Diisopropylamin, N-Benzyltertbutylamin, ε-Caprolactam oder Mischungen davon.

8. Polyisocyanatzusammensetzung nach einem der vorstehenden Ansprüche, **dadurch gekennzeichnet**, der zu 100 Gew.-% fehlende Anteil der insgesamt in der Aufbaukomponente enthaltenen Menge an Polyisocyanaten aus dem wenigstens einen aliphatischen Polyisocyanat besteht.

9. Polyisocyanatzusammensetzung nach einem der vorstehenden Ansprüche, **dadurch gekennzeichnet, dass** die Polyisocyanatzusammensetzung wenigstens ein organisches Lösungsmittel enthält.

10. Verwendung einer Polyisocyanatzusammensetzung nach einem der Ansprüche 1 bis 9 zur Herstellung eines Ein-Komponenten-Systems.

11. Ein-Komponenten-System, enthaltend wenigstens eine Polyisocyanatzusammensetzung nach einem der Ansprüche 1 bis 9, wenigstens ein Polyol und gegebenenfalls weitere Zusatzstoffe.

12. Verfahren zur Herstellung einer Beschichtung auf einem Substrat, bei dem ein Ein-Komponenten-System nach Anspruch 11 auf das Substrat aufgebracht und bei einer Temperatur im Bereich von 80 °C bis 300 °C ausgehärtet wird.

13. Beschichtung, hergestellt oder herstellbar nach einem Verfahren gemäß Anspruch 12.

14. Verbund aus einer Beschichtung nach Anspruch 13 und einem Substrat mit einer Oberfläche aus Metall und/oder Kunststoff.
